# EUROPEAN PATENT APPLICATION

(11) **EP 4 032 594 A1**
(43) Date of publication of application: **27.07.2022**
(21) Application number: 20864454.2
(22) Date of filing: 15.07.2020
(51) Int. Cl.: A63H 11/00, G05D 1/02, H04N 5/232, G06N 20/00, G10L 15/10, G10L 25/51

(54) **INFORMATION PROCESSING DEVICE, INFORMATION PROCESSING METHOD, AND PROGRAM**

(30) Priority: 17.09.2019 JP 2019168590
(71) Applicant: Sony Group Corporation, Tokyo 108-0075 (JP)
(72) Inventor: SHIMADA, Daiki, Tokyo 108-0075 (JP)
(74) Representative: MFG Patentanwälte Meyer-Wildhagen Meggle-Freund Gerhard PartG mbB
(86) International application number: PCT/JP2020/027500
(87) International publication number: WO 2021/053949

(57) **Abstract**

An information processing apparatus includes: a sensor unit that senses environmental information on a predetermined area; a storage unit that stores event information including event feature data on a predetermined event and meta information including space information on the predetermined event associated with the event feature data; and a control unit that retrieves the event information from the storage unit and acquires the space information included in the event information based on a sensing result from the sensor unit.

## Description

### Field

The present disclosure relates to an information processing apparatus, an information processing method, and a program.

### Background

For example, in a robot or an agent technique which operates in an environment such as a house, techniques for recognizing environmental information on the inside of a house and the periphery of a device have been developed and introduced.

### Citation List

### Patent Literature

Patent Literature 1: JP H9-218955 A
Patent Literature 2: WO 2014/167700

### Summary

### Technical Problem

Mobile robots and the like that operate in a predetermined environment, however, have greatly different visual information. In addition, the visual information changes from moment to moment. Moreover, a spatial region that can be observed by a mobile robot is made partial by an object existing in the predetermined environment. For that reason, there has been a demand for a recognition system that is not affected by a difference or a change between environments or visual occlusion in a predetermined environment such as a house.

Therefore, the present disclosure proposes an information processing apparatus, an information processing method, and a program capable of recognizing a specific event from some information in a predetermined environment.

### Solution to Problem

An information processing apparatus according to the present disclosure includes: a sensor unit that senses environmental information on a predetermined area; a storage unit that stores event information including event feature data on a predetermined event and meta information including space information on the predetermined event associated with the event feature data; and a control unit that retrieves the event information from the storage unit and acquires the space information included in the event information based on a sensing result from the sensor unit.

According to one aspect of an embodiment, a specific event can be recognized from some information in a predetermined environment. Note that the effects described here are not necessarily limited, and any effect described in the present disclosure may be exhibited. Moreover, the effects set forth in the specification are merely examples and not limitations. Other effects may be exhibited.

### Brief Description of Drawings

FIG. 1 outlines a learning phase of an information processing apparatus according to an embodiment of the present disclosure.
FIG. 2 outlines an evoking phase of the information processing apparatus according to the embodiment of the present disclosure.
FIG. 3 is a block diagram illustrating a configuration example of the information processing apparatus according to the embodiment of the present disclosure.
FIG. 4 illustrates the extraction of a voice feature and a feature amount according to the embodiment of the present disclosure.
FIG. 5A illustrates an image sequence of the learning phase according to the embodiment of the present disclosure.
FIG. 5B illustrates mask processing on an object region according to the embodiment of the present disclosure.
FIG. 5C illustrates the extraction of an object feature according to the embodiment of the present disclosure.
FIG. 5D illustrates a feature amount of an object feature according to the embodiment of the present disclosure.
FIG. 6 illustrates a specific example of event feature data according to the embodiment of the present disclosure.
FIG. 7 illustrates a specific example of an event DB according to the embodiment of the present disclosure.
FIG. 8 illustrates a specific example of the event feature data that has been updated according to the embodiment of the present disclosure.
FIG. 9 is a flowchart illustrating one example of an information processing method executed by the information processing apparatus according to the embodiment of the present disclosure.
FIG. 10 illustrates an example of initial setting of the information processing apparatus according to the embodiment of the present disclosure.
FIG. 11 illustrates an example of the initial setting of the information processing apparatus according to the embodiment of the present disclosure.
FIG. 12 illustrates a specific example of an event DB according to a variation of the present disclosure.
FIG. 13A illustrates a specific example of an information processing method according to the variation of the present disclosure.
FIG. 13B illustrates a specific example of a position of an information processing apparatus according to the variation of the present disclosure.
FIG. 13C illustrates a specific example of movement of the information processing apparatus according to the variation of the present disclosure.
FIG. 14 is a schematic diagram of the information processing apparatus according to the variation.
FIG. 15 is a hardware configuration diagram illustrating one example of a computer that implements the function of the information processing apparatus according to the present disclosure.

### Description of Embodiments

An embodiment of the present disclosure will be described in detail below with reference to the drawings. Note that, in the following embodiment, the same reference signs are attached to the same parts to omit duplicate description.

### (Embodiment)

### [Configuration of System According to Embodiment]

First, an embodiment of the present disclosure will be outlined. As described above, in recent years, a technique for recognizing predetermined environmental information on the inside of a house and the periphery of a device with a mobile robot such as a pet-type robot has been developed.

In contrast, visual information greatly varies depending on environments of houses and the like, and changes from moment to moment. That is, in recognition of routine events in predetermined environments such as a house, there are great differences between the environments, and there are different features of events between the environments. For that reason, the mobile robot needs to learn an event for each environment. Moreover, the above-described mobile robot can partially observe space at different times. That is, a sensor in the mobile robot observes different space at different times. The mobile robot thus needs to recognize an event by integrating features from inputs of a plurality of sensors and complementing incomplete information even the observation is incomplete. For that reason, there has been a demand for a recognition system that is not affected by a difference or a change between environments of the insides of houses or a visual occlusion.

Then, in the present disclosure, a routine event is defined by event feature data and event meta information, which are obtained based on inputs from a plurality of sensors, and is threedimensionally mapped. This allows event recognition processing more robust against a difference of a predetermined environment such as the inside of a house H and a visual occlusion. Here, the event feature data is visual information and auditory information that characterize the event itself. Specifically, the event feature data includes object feature data and voice feature data. The object feature data indicates the feature amount of an object. The voice feature data indicates the feature amount of voice. The event meta information includes position information indicating a predetermined position as space information.

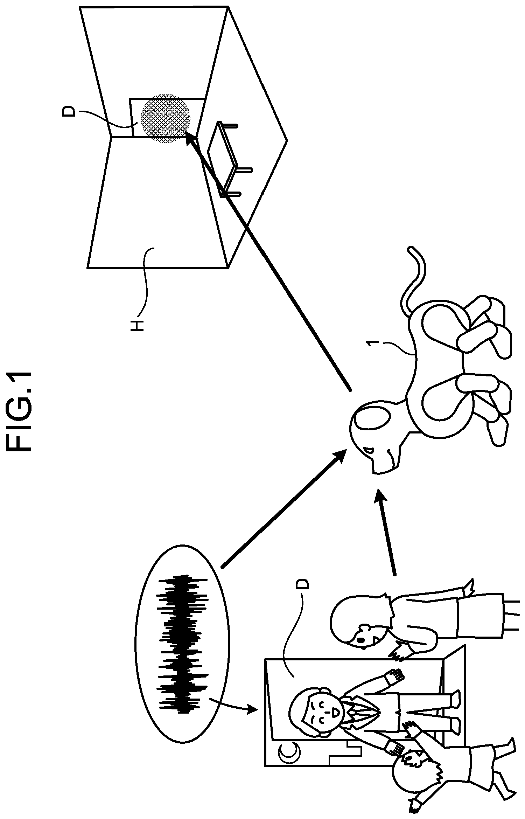

First, a learning phase of an information processing apparatus according to the present embodiment will be described. FIG. 1 illustrates one example of an outline of the learning phase of the information processing apparatus according to the present embodiment. As illustrated in FIG. 1, an information processing apparatus 1 according to the present embodiment exists in an environment of a predetermined area such as the house H. Note that, although a case where the information processing apparatus 1 is a pet-type robot will be described below, the information processing apparatus 1 may be a humanoid robot, a drone, or the like instead of the pet-type robot.

In the example of FIG. 1, the information processing apparatus 1 is the pet-type robot including, for example, a pet-shaped housing, and can move in the house H. The information processing apparatus 1 serving as a pet-type robot learns an event in the house H based on a detection result from a sensor that senses environmental information on the inside of the house H. Note that, although, in the example in FIG. 1, a case where a visit of a person, specifically, a return home of a man is learned is described as an event, the event is not necessarily limited to the visit of a person to the above-described house H, and various events can be detected. Although specific details will be described later, the information processing apparatus 1 includes a sensor unit 2, and can sense environmental information on a predetermined area. Specifically, the information processing apparatus 1 includes a microphone sensor 21 and a camera sensor 22. The information processing apparatus 1 senses an event in the house H based on voice data and video data. The voice data is a part of a result of sensing voice collected by the microphone sensor 21. The video data is a part of a result of sensing an image captured by the camera sensor 22.

In the example in FIG. 1, when a male resident returns home to the house H, the microphone sensor 21 acquires voice data, and the camera sensor 22 acquires video data. Note that, since the video data includes a plurality of pieces of image data, the video data includes the concept of the image data. The information processing apparatus 1 learns the correlation between the voice data and the video data to obtain event feature data. At the same time, the information processing apparatus 1 maps a place where the learned event feature data is obtained, and learns the place as event meta information including three-dimensional position information serving as space information. In the example in FIG. 1, the position information on a door D of an entrance of the house H is mapped as the position where the learned event feature data has occurred, and defined as event meta information.

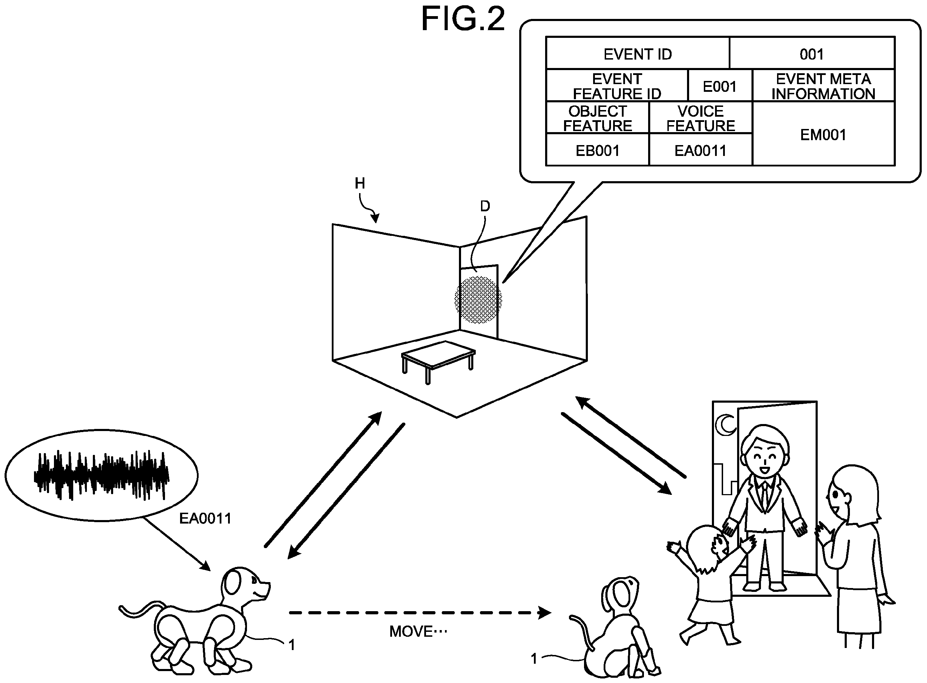

FIG. 2 illustrates one example of an outline of an evoking phase of the information processing apparatus according to the present embodiment. As illustrated in FIG. 2, when acquiring voice data with the microphone sensor 21, the information processing apparatus 1 retrieves event feature data based on the acquired voice data, and retrieves position information included in related event meta information. In the example in FIG. 2, first, voice feature data "EA0011" is retrieved based on voice data on, for example, footsteps of a man and sound of the door D opening. The voice data has been acquired by the microphone sensor 21. When the voice feature data "EA0011" is retrieved, a related event feature ID "E001" and event meta information "EM001" can be retrieved. The information processing apparatus 1 is moved to a place of the position information included in the retrieved event meta information "EM001" by a drive mechanism to be described later. This allows the information processing apparatus 1, which is a pet-type robot, to automatically move to a place where an event, which has occurred in the past and is similar to a currently occurring event, has occurred based on the past event.

Furthermore, when simultaneously acquiring voice data and video data in the above-described learning phase, the information processing apparatus 1 can gradually sophisticate event information by sequentially updating an event DB. Therefore, according to the information processing apparatus 1, a user does not need to preliminarily set detailed event information. The information processing apparatus 1 can optimize the event information by simple operation, and facilitate the optimization of the event information.

### [Configuration of Information Processing Apparatus According to Embodiment]

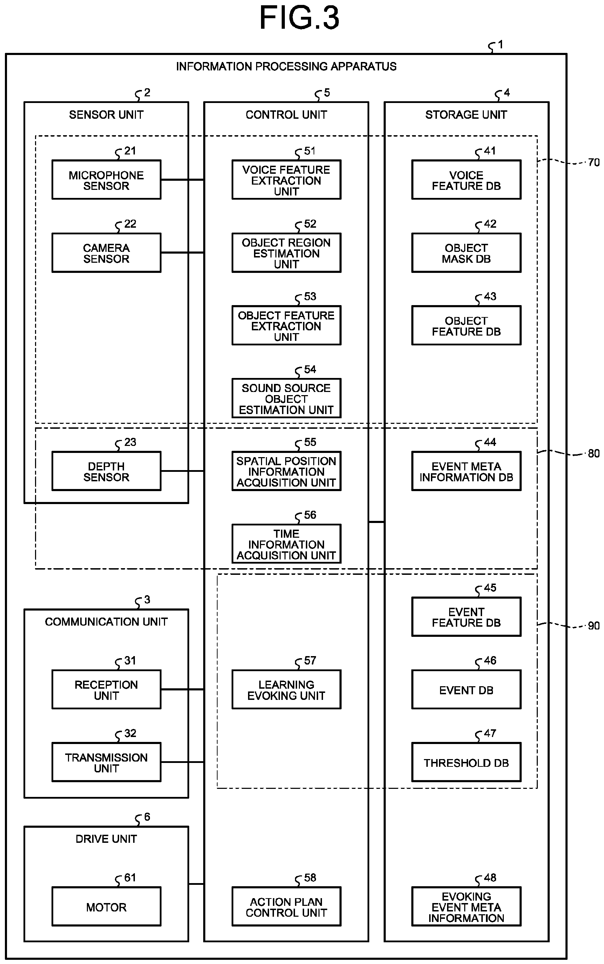

Next, a configuration example of the information processing apparatus 1 according to the embodiment will be described. FIG. 3 is a block diagram illustrating a configuration example of the information processing apparatus 1 according to the present embodiment. As illustrated in FIG. 2, the information processing apparatus 1 includes a sensor unit 2, a communication unit 3, a storage unit 4, and a control unit 5.

The sensor unit 2 includes a sensor that senses environmental information in a predetermined area (inside of house H). In the example in FIG. 2, the sensor unit 2 includes the microphone sensor 21, the camera sensor 22, and a depth sensor 23. The microphone sensor 21 is a device that collects ambient sound and outputs voice data converted into a digital signal via an amplifier and an analog digital converter (ADC). That is, the microphone sensor 21 is assumed to be a sensor to which voice can be input, such as a microphone. The camera sensor 22 is an imaging device that includes a lens system and an imaging element, and that captures an image (still image or moving image), such as an RGB camera. It is assumed that information acquired by the camera sensor 22, that is, input is a video having information on a single color or a plurality of colors. The depth sensor 23 is a device that acquires depth information, such as an infrared distance measuring device, an ultrasonic distance measuring device, laser imaging detection and ranging (LiDAR), and a stereo camera. That is, the depth sensor 23 is a so-called 3D sensor that measures the distance to a subject. Note that the information processing apparatus 1 may acquire a sensing result of a predetermined area from the sensor unit 2 provided separately from the information processing apparatus 1.

The communication unit 3 is a communication module that transmits and receives data to and from another communicable device via a predetermined network. The communication unit 3 includes a reception unit 31 and a transmission unit 32. The reception unit 31 receives predetermined information from another device, and outputs the information to the control unit 5. The transmission unit 32 transmits predetermined information to another device via the network.

The storage unit 4 is a storage device for recording at least event information. The storage unit 4 stores a voice feature database (DB) 41, an object mask DB 42, an object feature DB 43, an event meta information DB 44, an event feature DB 45, an event DB 46, a threshold DB 47, and evoking event meta information 48.

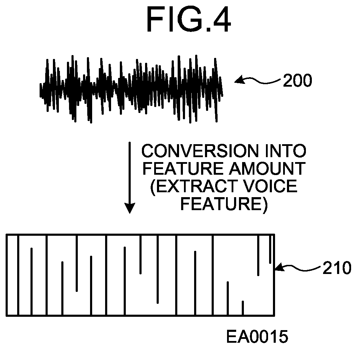

Voice feature data stored in the voice feature DB is information on the feature amount of voice data acquired by the information processing apparatus 1. The voice feature data corresponds to, for example, a feature amount extracted by the control unit 5 to be described later based on the voice data acquired by the microphone sensor 21. FIG. 4 illustrates a specific example of voice feature data according to the present embodiment. As illustrated in FIG. 4, in the storage unit 4, the voice feature DB 41 stores voice feature data 210 obtained by extracting a predetermined feature amount from voice data 200 acquired by the microphone sensor 21. Note that, in the following description, the voice feature data is abstracted as "EA0015" or the like. "EA0015" or the like serving as the voice feature data is specific voice feature data as illustrated in FIG. 4.

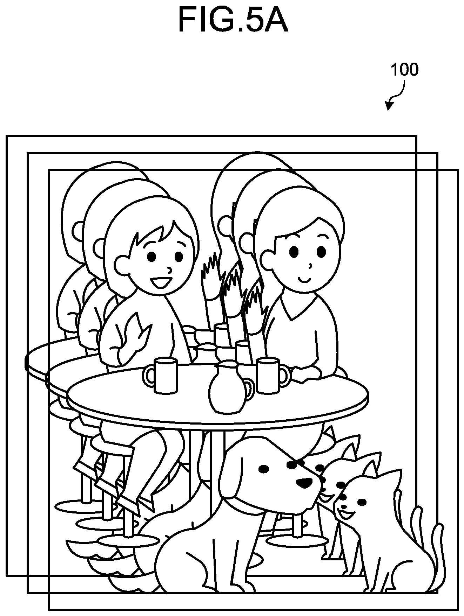

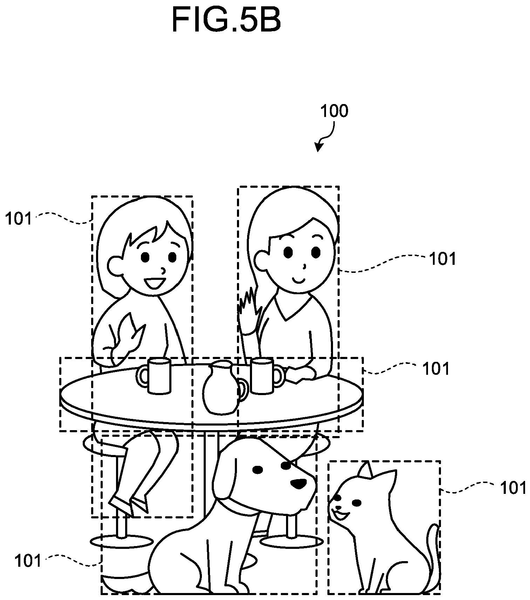

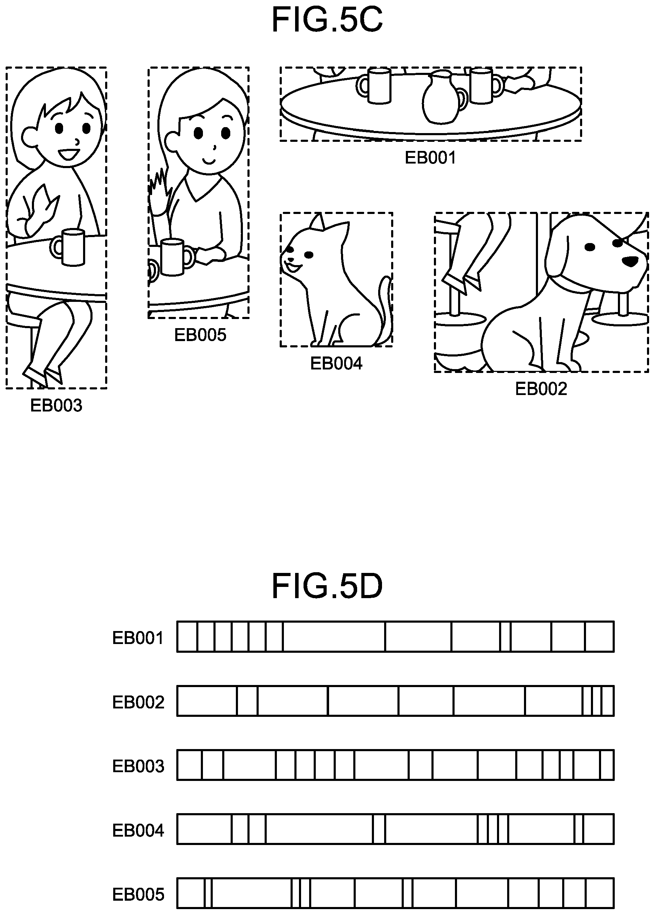

Returning to FIG. 3, object mask information stored in the object mask DB 42 relates to an object mask for estimating a region of an object for video data acquired by the camera sensor 22. The object mask information serves as a detection reference for an object. FIG. 5A illustrates a specific example of an image sequence according to the present embodiment. FIGS. 5B and 5C illustrate specific examples of the object mask information obtained by detecting an object 101 included in an image sequence of image data 100 in FIG. 5A and estimating a region where the object exists. The storage unit 4 in FIG. 3 stores various pieces of object mask information in FIG. 5C. FIG. 5D illustrates object feature data, which corresponds to the feature amount of each object extracted based on each object mask information stored in the object mask DB 42 of the storage unit 4. Note that each piece of object feature data obtained from the object mask information in FIG. 5C is abstracted as "EB001" or the like in the following description. The object feature data "EB001" or the like is specific object feature data in FIG. 5D. Specific object feature data is, for example, 256-dimensional vector data. The object feature DB 43 of the storage unit 4 in FIG. 3 stores these pieces of object feature data.

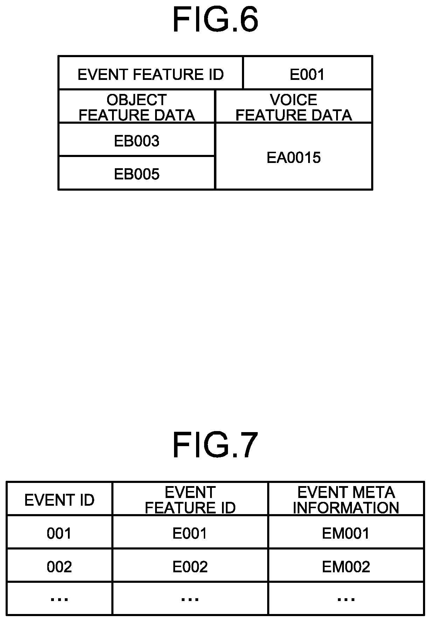

Furthermore, FIG. 6 illustrates one example of the event feature data. As illustrated in FIG. 6, the event feature data includes object feature data and voice feature data associated with the event feature ID. The event feature DB 45 of the storage unit 4 in FIG. 3 stores the object feature data.

Furthermore, the event meta information includes at least two-dimensional or three-dimensional position information. The event meta information may include time information. In the present embodiment, the event meta information is meta information including position information and time information related to a predetermined event. The event meta information may further include information necessary for an action of a mobile robot. The information necessary for an action of a mobile robot is, for example, category information, occurrence frequency information, occurrence date and time information, and the like related to an event.

In the event feature DB 45, the above-described voice feature data and object feature data are associated with each other, and stored as the event feature data. FIG. 6 illustrates a specific example of the event feature data. As illustrated in FIG. 6, the event feature data is obtained by associating the object feature data and the voice feature data, which have been associated with each other, with the event feature ID. In the example in FIG. 6, object feature data "EB003" and "EB005" (see FIGS. 5C and 5D) and the voice feature data "EA0015" (see FIG. 4) related thereto are associated with the event feature ID "E001".

Moreover, in the event DB 46, the above-described event feature data and event meta information are associated with each other, and stored as the event information. FIG. 7 illustrates a specific example of the event information. As illustrated in FIG. 7, the event information is data obtained by associating the event feature ID and the event meta information, which are associated with each other, with an event ID. In the example in FIG. 7, an event ID "001" is attached to the event feature ID "EM001" and the event meta information "EM001" related thereto to constitute the event information. Furthermore, an event ID "002" is attached to the event feature ID "EM002" and the event meta information "EM002" related thereto to constitute the event information.

The threshold DB 47 includes information on a threshold for determining the coincidence level between the voice data acquired by microphone sensor 21 and the video data acquired by camera sensor 22. The threshold of the coincidence level is referred to as a coincidence threshold in the present specification, and relates to the coincidence level between the voice feature data obtained from the voice data and the object feature data obtained from the video data. Furthermore, the coincidence threshold is information on a threshold for determining whether or not to enter a learning phase, and, in other words, is used for determining whether or not the event is to be registered. When the input voice data or video data exceeds the coincidence threshold, processing enters the learning phase. When the input voice data or video data is equal to or less than the coincidence threshold, the processing enters the evoking phase. Here, in the learning phase, the processing of changing the event DB 46 is performed by registration processing or update processing performed by the control unit 5. In the evoking phase, the control unit 5 performs processing of outputting the event meta information included in predetermined event information from the event DB 46 under a predetermined condition.

The threshold DB 47 includes information on a threshold for determining the similarity level between the voice feature data registered in the voice feature DB 41 and the voice data acquired by the microphone sensor 21. Furthermore, the threshold DB 47 includes information on a threshold for determining the similarity level between the object feature data registered in the object feature DB 43 and the video data acquired by the camera sensor 22. These thresholds are referred to as evoking thresholds in the present specification. In other words, the evoking threshold is used for determining whether or not event feature data including voice feature data or object feature data similar to the feature amount of the input voice data or video data exists in the event information stored in the event DB 46.

The evoking event meta information 48 is included in the event information retrieved from the event DB 46. The information processing apparatus 1 makes an action plan based on the evoking event meta information 48.

Next, the control unit 5 will be described. The control unit 5 has a function of controlling each configuration of the information processing apparatus 1. As illustrated in FIG. 3, the control unit 5 includes a voice feature extraction unit 51, an object region estimation unit 52, an object feature extraction unit 53, a sound source object estimation unit 54, a spatial position information acquisition unit 55, a time information acquisition unit 56, a learning evoking unit 57, and an action plan control unit 58.

The voice feature extraction unit 51 extracts a feature amount having a high abstraction level from the voice data input from the microphone sensor 21, and converts the feature amount into voice feature data. Here, the processing of conversion from voice data to voice feature data can be achieved by, for example, a technique such as Fourier transform processing.

The object region estimation unit 52 estimates a region where the object 101 exists as illustrated in FIG. 5B for a plurality of pieces of image data 100 included in the video data in FIG. 5A acquired by the camera sensor 22, and outputs object mask information indicating the region of the object 101. This causes the individual objects 101 in the image data 100 to be distinguished as illustrated in FIG. 5C, and each piece of object mask information to be stored in the storage unit 4. The object feature extraction unit 53 specifies a region of each object 101 from the plurality of pieces of image data 100 included in the input video data and the object mask information. As illustrated in FIG. 5D, the object feature extraction unit 53 extracts a feature amount with a high abstraction level for each region of each object 101 from the specified region of the object 101, and converts the feature amount into object feature data. The storage unit 4 stores the object feature extraction unit 53. Note that the processing of specifying the region of the object 101 and the processing of conversion into the object feature data can be achieved by an existing technique.

Returning to FIG. 3, the sound source object estimation unit 54 calculates the coincidence level between the voice feature data obtained by the voice feature extraction unit 51 and each piece of object feature data obtained by the object feature extraction unit 53. The sound source object estimation unit 54 the sound source object estimation unit 54 estimates the source of the voice data detected by the voice feature extraction unit 51, that is, the object 101 serving as a sound source based on the calculation of the coincidence level. Specifically, for example, the sound source object estimation unit 54 estimates the azimuth in which the sound source is generated by using various azimuth arithmetic algorithms such as a multiple signal classification (MUSIC) method for the voice data, and estimates the position of the object serving as the sound source. The sound source object estimation unit 54 associates the object feature data and the voice feature data, which are estimated to have a high coincidence level, with each other, and outputs the object feature data and the voice feature data as the event feature data. Examples of a method of calculating the coincidence level between the voice feature data and the object feature data include, but are not necessarily limited to, a method of calculating an inner product of the object feature data and the voice feature data. The method of calculating the coincidence level between the voice feature data and the object feature data can be executed by a neural network obtained by machine learning, for example. Here, in the example in FIGS. 5C and 6, the event feature ID "E001" is attached to the event feature data, and the object feature data "EB003" and "EB005" and the voice feature data "EA0015" are associated with each other.

The microphone sensor 21, the camera sensor 22, the voice feature extraction unit 51, the object region estimation unit 52, the object feature extraction unit 53, the sound source object estimation unit 54, the voice feature DB 41, the object mask DB 42, and the object feature DB 43 described above constitute a feature extraction unit 70. The feature extraction unit 70 generally extracts event feature data from various pieces of data such as input voice data and video data. In contrast, the feature extraction unit 70 calculates the coincidence level between the object feature data and the voice feature data, and calculates whether or not the video data includes an object serving as a sound source.

The spatial position information acquisition unit 55 creates a map of a predetermined area (inside of house H) based on the depth information detected by the depth sensor 23, and stores the map in the storage unit 4 as map information serving as a base of the event meta information. The spatial position information acquisition unit 55 can generate the map information by simulation localization and mapping (SLAM). Note that the spatial position information acquisition unit 55 may update the map information at a predetermined cycle on the assumption that the furniture in the house H is rearranged, or may generate a map every time the information processing apparatus 1 moves. Furthermore, the information processing apparatus 1 may store a map generated by another device as the map information. The spatial position information acquisition unit 55 can calculate specific position information by comparing the depth information obtained by the depth sensor 23 with the map information stored in the storage unit 4. Examples of a method of acquiring the predetermined position information with the spatial position information acquisition unit 55 can include the following processing. That is, the method includes processing of acquiring coordinate information on the earth by using a positioning system such as a global positioning system (GPS) and self-position estimation processing of acquiring a relative position from a predetermined starting point by using video data, such as Visual SLAM.

The time information acquisition unit 56 is, for example, a timer such as a clock or a time information receiving mechanism. The time information receiving mechanism receives time information from a server that outputs time information via a predetermined network.

The spatial position information acquisition unit 55 outputs the position information associated with an observed event as a part of the event meta information. The event meta information is stored in an event meta information database of the storage unit 4. The event meta information includes at least event position information. Here, the event position information refers to a coordinate representation that uses any position as an origin and that includes two or more numerical values. The position information can be expressed by, for example, space information such as a relative position from a predetermined starting point in the map of an environment, that is, an XYZ position in a world coordinate system, and coordinate information of a world geodetic system obtained from a GPS satellite. Furthermore, the time information acquired by the time information acquisition unit 56 may be associated with the position information calculated by the spatial position information acquisition unit 55 as time information on the time when an event has occurred, and used as a part of the event meta information.

The depth sensor 23, the spatial position information acquisition unit 55, the time information acquisition unit 56, and the event meta information DB 44 described above constitute an event meta information acquisition unit 80. The event meta information acquisition unit 80 generally outputs information necessary for retrieval of event information and action of a mobile robot as the event meta information based on input from the depth sensor 23, and stores the information in the storage unit 4.

The learning evoking unit 57 serving as a part of a generation unit associates the event feature data obtained by the feature extraction unit 70 and the event meta information obtained by the event meta information acquisition unit 80 with each other to generate event information, and stores the event information in the event DB 46 of the storage unit 4. Note that, although the event feature data is stored in the event feature DB 45 and the event information is stored in the event DB 46 in the present embodiment, these are not limitations. That is, a system capable of outputting related information from specific input, such as a Boltzmann machine and a self-organizing map, may be used instead of using a database.

The learning evoking unit 57 determines which one of the registration processing, the update processing, and the evoking processing on the event information is to be executed based on the event feature data output from the feature extraction unit 70 and a coincidence threshold or an evoking threshold stored in the threshold DB 47.

The learning evoking unit 57, the event feature DB 45, the event DB 46, and the threshold DB 47 described above constitute an event memory unit 90. The event memory unit 90 generally selects any processing of registration, update, and evoking for the event information, while generating event information and storing the event information in the storage unit 4.

The action plan control unit 58 has a function of planning an action of the information processing apparatus 1 based on information acquired by the sensor unit 2 and various pieces of data stored in the storage unit 4. The action plan control unit 58 according to the present embodiment first retrieves event meta information from the voice data acquired by the microphone sensor 21. The event meta information corresponds to the voice data, and is stored in the event meta information DB 44. The action plan control unit 58 subsequently determines to execute an action of moving to a position specified by position information based on the position information included in the retrieved event meta information.

Furthermore, the action plan control unit 58 has a function of controlling the operation of a drive unit 6. The drive unit 6 has a function of driving a physical configuration of the information processing apparatus 1. The drive unit 6 has a function for moving the position of the information processing apparatus 1. The drive unit 6 is, for example, an actuator driven by a motor 61. For example, the action plan control unit 58 controls the motor 61 of the drive unit 6 based on the above-described action plan to drive an actuator of each joint unit provided in the drive unit 6. Note that the drive unit 6 may have any configuration as long as the information processing apparatus 1 can achieve a desired operation. The drive unit 6 may have any configuration as long as the position of the information processing apparatus 1 can be moved. When the information processing apparatus 1 includes a movement mechanism such as a caterpillar and a tire, the drive unit 6 drives the caterpillar, the tire, and the like. The drive unit 6 may further include a sensor necessary for controlling a mobile robot, such as a GPS reception unit and an acceleration sensor.

### [Information Processing Method According to Embodiment]

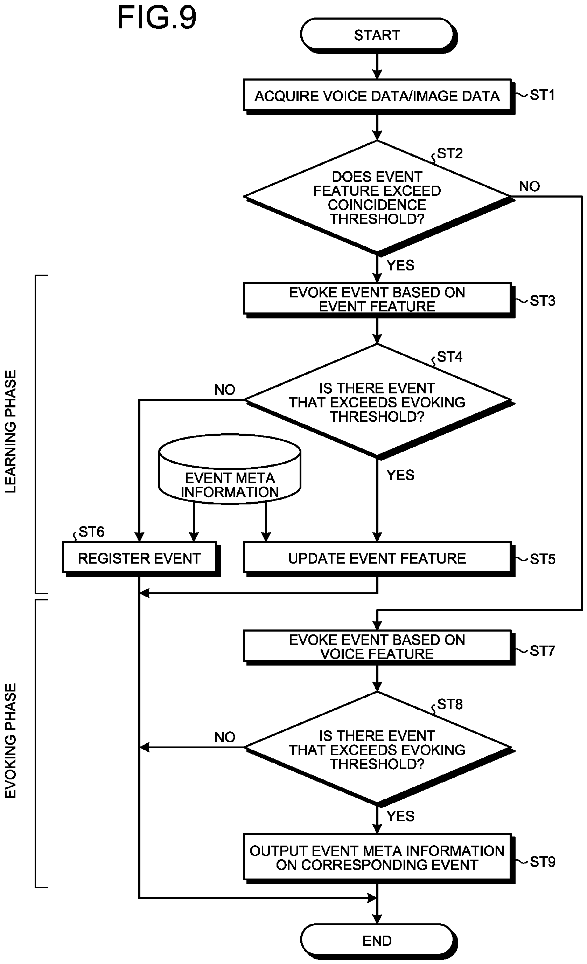

Next, a processing procedure executed by the information processing apparatus 1 according to the present embodiment will be described. FIG. 9 is a flowchart illustrating a processing procedure executed by the information processing apparatus 1 according to the embodiment.

As illustrated in FIG. 9, the feature extraction unit 70 of the information processing apparatus 1 first acquires an event feature in Step ST1. Specifically, the microphone sensor 21 first acquires voice data while the camera sensor 22 acquires video data. Note that the camera sensor 22 may acquire a plurality of pieces of image data instead of acquiring video data. The voice feature extraction unit 51 of the control unit 5 extracts voice feature data from the acquired voice data, and stores the voice feature data in the voice feature DB 41. The object region estimation unit 52 and the object feature extraction unit 53 extract object feature data from the video data by using object mask data, and store the object feature data in the object feature DB 43. The sound source object estimation unit 54 estimates an object serving as a sound source of the acquired voice data from the voice feature data and the object feature data. The voice feature data and the object feature data are combined to generate event feature data. Note that, if the voice data cannot be obtained or the object feature data cannot be extracted from the video data, the event feature data may include only the voice feature data or only the object feature data. Furthermore, in parallel with the generation of the event feature data, the event meta information acquisition unit 80 generates event meta information at the place where the voice data and the video data have been acquired, and stores the event meta information in the event meta information DB 44.

Next, when the processing proceeds to Step ST2, the event memory unit 90 of the information processing apparatus 1 determines whether or not the generated event feature data exceeds a coincidence threshold. Specifically, the sound source object estimation unit 54 first calculates the coincidence level between the voice feature data and the object feature data included in the event feature data, and outputs the coincidence level to the learning evoking unit 57. When the learning evoking unit 57 determines that the input coincidence level exceeds the coincidence threshold (Step ST2: Yes), the processing proceeds to Step ST3. When the voice feature data and the object feature data have a high coincidence level, the camera sensor 22 images an object that has output voice data substantially at the same time as the microphone sensor 21 acquires the voice data. In this case, as described above, the processing of the information processing apparatus 1 enters a learning phase.

Next, in Step ST3 serving as the learning phase, the control unit 5 of the information processing apparatus 1 evokes an event based on the event feature data. Specifically, the learning evoking unit 57 of the control unit 5 retrieves the event information stored in the event DB 46 based on the acquired event feature data. For example, the event DB 46 stores an event feature ID and event meta information associated with an event ID as illustrated in FIG. 7.

The processing subsequently proceeds to Step ST4. The learning evoking unit 57 determines whether or not there is event information having event feature data in which the similarity level to the acquired event feature data exceeds a predetermined evoking threshold. Note that, in addition to the threshold of the similarity level regarding the event feature data, the learning evoking unit 57 may use a threshold based on other information included in the event meta information or a threshold based on an occurrence frequency or occurrence date and time as the evoking threshold regarding the similarity level. When the learning evoking unit 57 determines that there is event information including event feature data that exceeds the predetermined evoking threshold (Step ST4: Yes), the processing proceeds to Step ST5. Note that the description will be given on the assumption that the event feature data included in the retrieved event information is the event feature data of the event feature ID "E001" in FIG. 6.

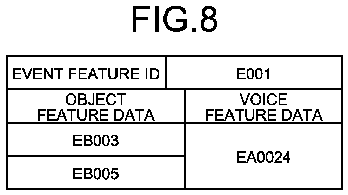

In Step ST5, the learning evoking unit 57 updates the retrieved event feature data. Specifically, the learning evoking unit 57 updates the event feature data included in the retrieved event information to the acquired event feature data. That is, for example, the voice feature data among the event feature data with the event feature ID "E001" is updated from the voice feature data "EA0015" in FIG. 6 to voice feature data "EA0024" in FIG. 8. Note that the object feature data may be updated as necessary. The updated event feature data with the event feature ID "E001" is stored in the event ID "001" in FIG. 7. The event information is updated. Then, the learning phase executed by the information processing apparatus 1 ends.

Furthermore, when the learning evoking unit 57 determines that there is no event information including event feature data that exceeds the predetermined evoking threshold in Step ST4 (Step ST4: No), the processing proceeds to Step ST6. In Step ST6, the control unit 5 registers an event. Specifically, the learning evoking unit 57 generates event feature data from the voice feature data and the object feature data output from the feature extraction unit 70. Meanwhile, the learning evoking unit 57 acquires the event meta information output from the event meta information acquisition unit 80. The learning evoking unit 57 associates the event feature data and the event meta information with each other, attaches an event ID, and stores the event feature data and the event meta information in the event DB 46. Then, the learning phase executed by the information processing apparatus 1 ends.

Furthermore, when the learning evoking unit 57 determines that the calculated coincidence level is equal to or less than the coincidence threshold in Step ST2 (Step ST2: No), the processing proceeds to Step ST7. When the coincidence level between the voice feature data and the object feature data is equal to or less than the coincidence threshold, the camera sensor 22 has not imaged the object that had output the voice data at the time when the microphone sensor 21 acquires the voice data. In this case, as described above, the processing of the information processing apparatus 1 enters an evoking phase.

Next, in Step ST7 serving as the evoking phase, the control unit 5 of the information processing apparatus 1 evokes an event based on the voice feature data. Specifically, the learning evoking unit 57 of the control unit 5 retrieves the event information stored in the event DB 46 based on the acquired voice feature data. Note that the learning evoking unit 57 may retrieve the event information based on the acquired object feature data. For example, the event DB 46 stores an event feature ID and event meta information associated with an event ID as illustrated in FIG. 7.

In Step ST8, the learning evoking unit 57 subsequently determines whether or not there is event information in which the similarity level between the voice feature data included in the retrieved event information and the acquired voice feature data exceeds a predetermined evoking threshold. When the learning evoking unit 57 determines that there is the event information including the voice feature data in which the similarity level to the acquired voice feature data exceeds the evoking threshold (Step ST8: Yes), the processing proceeds to Step ST9. For example, a case where the acquired voice feature data is "EA0015" will be described below in an example.

In Step ST9, the control unit 5 outputs the event meta information of a corresponding event. Specifically, the learning evoking unit 57 first retrieves the event feature data "E001" (see

FIG. 6) including the voice feature data "EA0015", and retrieves the event information with the event ID "001" in FIG. 7. Next, the learning evoking unit 57 reads the event meta information "EM001" included in the retrieved event information with the event ID "001". The learning evoking unit 57 outputs the read event meta information "EM001" to the action plan control unit 58 as the evoking event meta information 48. Then, the evoking phase executed by the information processing apparatus 1 ends.

The action plan control unit 58 to which the evoking event meta information 48 is input executes an action plan based on the position information included in the evoking event meta information 48, and controls the drive unit 6. As a result, the information processing apparatus 1 moves to the place indicated by the position information included in the evoking event meta information 48.

In contrast, in step ST8, when the learning evoking unit 57 determines that there is no event information including the voice feature data in which the similarity level to the acquired voice feature data exceeds the evoking threshold (Step ST8: No), the evoking phase executed by the information processing apparatus 1 ends.

### [Examples]

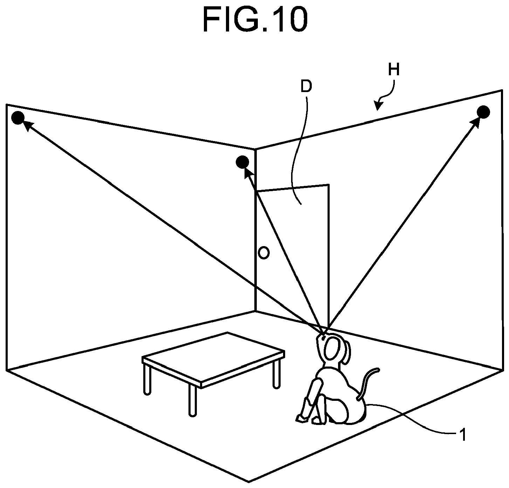

Next, a specific example of the information processing apparatus 1 according to the embodiment will be described. In the present example, a case where a husband or a father comes home to the house H will be described as an example. First, as illustrated in FIG. 10, the spatial position information acquisition unit 55 of the information processing apparatus 1 preparatorily creates a map of a predetermined area (inside of house H) by, for example, Visual SLAM based on the depth information detected by the depth sensor 23. In this case, the map information includes, for example, the position of the door D that emits voice. The created map is stored in the event meta information DB 44 of the storage unit 4 as map information serving as a base of the event meta information. This allows the information processing apparatus 1 to always estimate the position of the information processing apparatus 1 itself from a starting point.

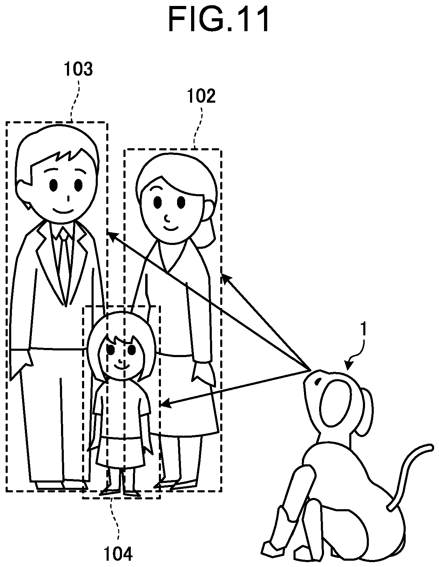

Furthermore, as illustrated in FIG. 11, the object feature extraction unit 53 of the information processing apparatus 1 detects a person, such as a resident of the house H, and an object with the camera sensor 22. Detected objects 102, 103, and 104 are converted into object feature data, and stored in the object feature DB of the storage unit 4. Detection and identification of an object performed by the object feature extraction unit 53 can be achieved by using known machine learning or pattern recognition technology such as a boosting method, a neural network, and a hidden Markov model (HMM) method.

Thereafter, as illustrated in FIG. 1, when a resident of the house H comes home from the outside and opens the door D of an entrance, the door D generates voice. The voice includes, for example, an opening/closing sound of the door D of the entrance, voice uttered by a resident who has come home, or the like. The information processing apparatus 1 acquires voice generated at the door D as voice data. When the information processing apparatus 1 can image the voice-generated situation as video data substantially at the same time as the resident opens the door D, the control unit 5 determines that the video data and the voice data have a high coincidence level. In this case, the processing of the information processing apparatus 1 proceeds to the above-described learning phase.

In contrast, as illustrated in FIG. 2, the information processing apparatus 1 sometimes cannot image the voice-generated situation as video data at the time when the resident opens the door D of the entrance. In this case, the control unit 5 of the information processing apparatus 1 determines that the video data and the voice data have low coincidence level, and the information processing apparatus 1 proceeds to the evoking phase. When proceeding to the evoking phase, the information processing apparatus 1 retrieves the event information and reads the evoking event meta information 48 based on the input voice data. The information processing apparatus 1 executes the action plan based on the read evoking event meta information 48, and moves to the position indicated by the position information included in the evoking event meta information 48. This allows the information processing apparatus 1 to produce a situation for greeting the resident who has come home in response to the generated voice.

Although, in the present example, the information processing apparatus 1 retrieves event information including similar voice data based on the acquired voice data and moves to the position based on the associated event meta information, the information processing apparatus 1 may do the same based on the acquired video data. For example, the information processing apparatus 1 that has acquired thunder light as video data may retrieve event information including object feature data based on similar video data, and moves to a position based on associated event meta information.

Note that, as described above, the information processing apparatus 1 including a mobile robot can newly generate event information that is not stored in the event DB 46 only when voice data and video data corresponding to each other are acquired substantially at the same time and the processing proceeds to the learning phase. In this case, the generation of the event information depends on chance. Then, various methods can be adopted to facilitate simultaneous acquisition of voice data and video data related to each other. In the above-described example, for example, when the position of the door D of the entrance is not mapped, an application installed in a mobile terminal device possessed by the resident and GPS information included in the mobile terminal device may be linked. First, setting is performed to inform the resident of information on a mobile robot and to transmit the position information on the resident to the mobile robot by using the application of the mobile terminal device. Then, when the resident approaches the house H, the mobile robot is controlled to move to a random place and stand by. Furthermore, when there is no resident in the house H, the mobile robot may be set to stand by at a different place each time. Furthermore, beamforming may be used to the microphone sensor 21 to add an action plan for movement in a direction in which sound is emitted. Moreover, the application of the mobile terminal device may direct a resident who has not gone out to greet a resident coming home with the mobile robot.

### (Variations)

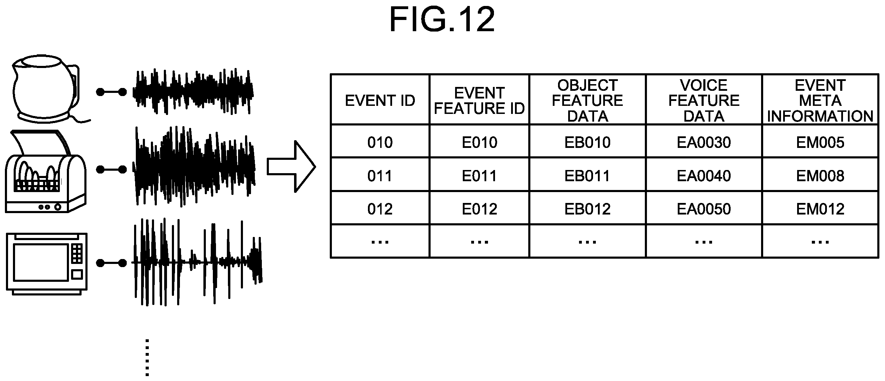

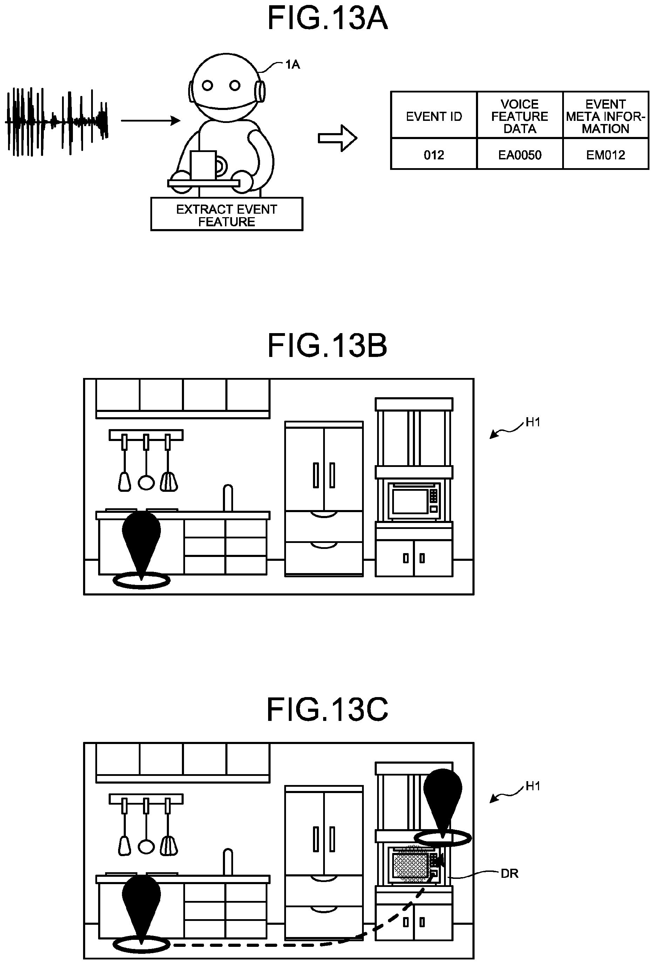

Next, a variation of the above-described example will be described. FIG. 12 illustrates a specific example of an event DB according to a variation of the present disclosure. FIGS. 13A, 13B, and 13C illustrate a specific example of an information processing method according to the variation of the present disclosure and movement of an information processing apparatus. Here, an information processing apparatus 1A according to the variation is, for example, a mobile robot that operates a home electric appliance (hereinafter, home appliance).

As illustrated in FIG. 12, in the variation, the event feature data of the object feature data and the voice feature data of each home appliance is stored in the event DB 46 of the storage unit 4 in association with the event meta information including the information on the position where each home appliance is disposed. In the example in FIG. 12, for example, event IDs "010", "011", and "012" are set to a water heater, a dishwasher, and a microwave oven, respectively, and stored in the event DB 46. Specifically, for example, in the microwave oven, an event ID "010", an event feature ID "E012", object feature data "EB012", voice feature data "EA0050", and event meta information "EM012" are stored in the event DB 46 in association with each other.

In the state where the event information is stored in the storage unit 4 of the information processing apparatus 1A as described above, the information processing apparatus 1A acquires sound emitted by a home appliance as illustrated in FIG. 13A, for example. The information processing apparatus 1A extracts voice feature data from the acquired voice data, retrieves voice feature data having a high similarity level to the extracted voice feature data, and retrieves event meta information associated with the voice feature data. In the example in FIG. 13A, voice feature data "EA0050" having a high similarity level to the acquired and extracted voice feature data is retrieved, and associated event meta information "EM012" is retrieved. This allows the information processing apparatus 1A to recognize the position of a microwave oven, which is a home appliance. The information processing apparatus 1A moves from the position in FIG. 13B to the position in FIG. 13C based on the position information included in the retrieved event meta information "EM012", and operates the home appliance.

### [Outline of Variation]

By the way, although, in the above-described embodiment, a case where the information processing apparatuses 1 and 1A are disposed in a predetermined area (house H) has been described, this is not a limitation. For example, the information processing apparatus 1 can be configured as a server apparatus.

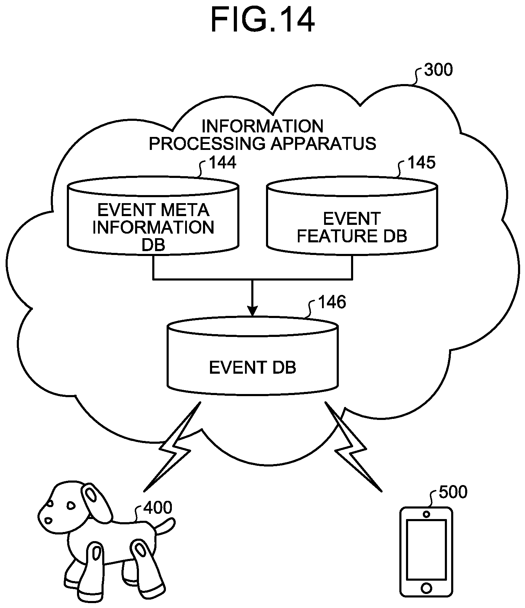

FIG. 14 is a schematic diagram of an information processing apparatus 300 according to the variation. Note that FIG. 14 illustrates the information processing apparatus 300 in a simplified manner. As illustrated in FIG. 14, the information processing apparatus 300 according to the variation is a server apparatus, and includes an event meta information DB 144, an event feature DB 145, and an event DB 146.

For example, the information processing apparatus 300 receives voice data and video data as sensing results of environmental information transmitted from a pet-type robot 400. The pet-type robot 400 includes the sensor unit 2, the drive unit 6, and a drive control unit. The drive unit 6 can move to a position specified by input position information. The drive control unit drives the drive unit 6. The information processing apparatus 300 controls the action of the pet-type robot 400 based on the event meta information and the event feature data. The event meta information is stored in the event meta information DB. The event feature data is stored in the event feature DB 145. The information processing apparatus 300 transmits information on the position to which the pet-type robot 400 is to move based on the received voice data or video data. The pet-type robot 400 that has received the position information moves to a position included in the received position information. Note that, although a case where the information processing apparatus 300 receives a sensing result from the pet-type robot 400 has been described, this is not a limitation.

Moreover, the information processing apparatus 300 and a mobile terminal device 500 possessed by a user may be made communicable with each other, and the movement of the pet-type robot 400 may be made controllable by the mobile terminal device 500.

### [Other Variations]

By the way, although, in the above-described embodiment, a predetermined area has been described as the house H, this is not a limitation. Any area can be set as the predetermined area.

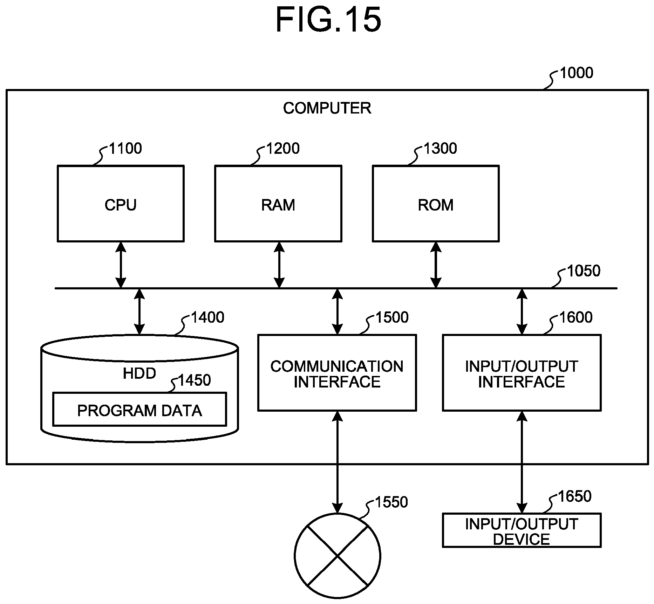

An information device such as the information processing apparatus, an HMD, and a controller according to the above-described embodiment is implemented by a computer 1000 having a configuration as illustrated in FIG. 15, for example. An example of the information processing apparatus 1 according to the embodiment will be described below. FIG. 15 is a hardware configuration diagram illustrating one example of the computer 1000 that implements the function of the information processing apparatus 1. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates based on a program stored in the ROM 1300 or the HDD 1400, and controls each unit. For example, the CPU 1100 develops a program stored in the ROM 1300 or the HDD 1400 on the RAM 1200, and executes processing corresponding to various programs.

The ROM 1300 stores a boot program such as a basic input output system (BIOS) executed by the CPU 1100 at the time when the computer 1000 is started, a program depending on the hardware of the computer 1000, and the like.

The HDD 1400 is a computer-readable recording medium that non-transiently records a program executed by the CPU 1100, data used by the program, and the like. Specifically, the HDD 1400 is a recording medium that records a program according to the present disclosure. The program is one example of a program data 1450.

The communication interface 1500 is used for connecting the computer 1000 to an external network 1550 (e.g., Internet). For example, the CPU 1100 receives data from another device and transmits data generated by the CPU 1100 to another device via the communication interface 1500.

The input/output interface 1600 is used for connecting an input/output device 1650 and the computer 1000 to each other. For example, the CPU 1100 receives data from an input device such as a keyboard and a mouse via the input/output interface 1600. Furthermore, the CPU 1100 transmits data to an output device such as a display, a speaker, and a printer via the input/output interface 1600. Furthermore, the input/output interface 1600 may function as a medium interface that reads a program and the like recorded in a predetermined recording medium (medium). The medium includes, for example, an optical recording medium such as a digital versatile disc (DVD) and a phase change rewritable disk (PD), a magneto-optical recording medium such as a magneto-optical disk (MO), a tape medium, a magnetic recording medium, a semiconductor memory, and the like.

For example, when the computer 1000 functions as the information processing apparatus 1 according to the embodiment, the CPU 1100 of the computer 1000 implements the functions of the spatial position information acquisition unit 55 and the like by executing a program loaded on the RAM 1200. Furthermore, the HDD 1400 stores a program according to the present disclosure and data in the storage unit 4. Note that the CPU 1100 reads the program data 1450 from the HDD 1400 and executes the program data 1450. In another example, the CPU 1100 may acquire these programs from another device via the external network 1550.

Conventional information processing apparatuses such as a mobile robot have difficulty in being used in an environment such as the inside of the house H since the information processing apparatuses sometimes cannot evoke both an image and voice in association with space information or have a restriction on input information. In contrast, according to the above-described embodiment, both the image data and the voice data can be associated with the space information, and stored in a mutually evocable state. This allows all other information, specifically, the voice data, the image data, and the event meta information to be retrieved by acquiring only the voice data or only the video data. All the other information can be used for controlling the action of the mobile robot. Furthermore, even in an environment where the video data cannot be acquired, the information processing apparatuses 1 and 1A such as a mobile robot can move to a place where an event occurs as long as the voice data can be acquired. Similarly, even in an environment where the voice data cannot be acquired, the information processing apparatuses 1 and 1A such as a mobile robot can move to a place where an event occurs as long as the video data can be acquired. Moreover, since event information is registered or continuously updated at timing when voice data and video data can be simultaneously acquired, the information processing apparatuses 1 and 1A can operate robustly in response to a change in environment. Furthermore, the environment around an object or the like in the house H changes from moment to moment. The information processing apparatuses 1 and 1A can operate in response to a change in environment also in the next and subsequent times by shifting the processing to the learning phase at the timing when the voice data and the video data are simultaneously acquired.

Note that the present technology can also have the configurations as follows.
(1) An information processing apparatus comprising:
   a sensor unit that senses environmental information on a predetermined area;
   a storage unit that stores event information including event feature data on a predetermined event and meta information including space information on the predetermined event associated with the event feature data; and
   a control unit that retrieves the event information from the storage unit and acquires the space information included in the event information based on a sensing result from the sensor unit.
(2) The information processing apparatus according to (1),
   wherein the control unit
   determines a similarity level between a sensing result sensed by the sensor unit and the event feature data stored in the storage unit, and
   when the similarity level exceeds a predetermined evoking threshold, retrieves event information including event feature data that exceeds the evoking threshold from the storage unit.
(3) The information processing apparatus according to (1) or (2),
   wherein the event feature data includes object feature data obtained by an object that is allowed to be sensed by the sensor unit and voice feature data obtained by voice that is allowed to be sensed by the sensor unit.
(4) The information processing apparatus according to (3),
   wherein the control unit retrieves, from the storage unit, event information including voice feature data in which a similarity level to voice feature data exceeds a predetermined evoking threshold based on the latter voice feature data obtained from voice sensed by the sensor unit.
(5) The information processing apparatus according to (3),
   wherein the control unit retrieves, from the storage unit, event information including object feature data in which a similarity level to object feature data exceeds a predetermined evoking threshold based on the latter object feature data obtained from an object sensed by the sensor unit.
(6) The information processing apparatus according to any one of (3) to (5),
   wherein the object feature data corresponds to a feature amount of an object sensed by the sensor unit, and
   the voice feature data corresponds to a feature amount of voice emitted from an object sensed by the sensor unit.
(7) The information processing apparatus according to any one of (1) to (6), allowed to control a mobile robot including a drive unit that moves a housing,
   wherein the control unit makes an action plan based on the acquired space information, and performs control of causing the mobile robot to act based on the action plan.
(8) The information processing apparatus according to any one of (1) to (7),
   wherein the information processing apparatus is a mobile robot.
(9) An information processing method comprising
   a computer retrieving event information from a storage unit, and outputs space information included in the event information based on a sensing result from a sensor unit that senses environmental information on a predetermined area, the storage unit storing the event information that includes event feature data on a predetermined event and meta information including the space information on the predetermined event associated with the event feature data.
(10) A program causing a computer to function as:
   a sensor unit that senses environmental information on a predetermined area;
   a storage unit that stores event information including event feature data on a predetermined event and meta information including space information on the predetermined event associated with the event feature data; and
   a control unit that retrieves the event information from the storage unit and outputs the space information included in the event information based on a sensing result from the sensor unit.
(11) An information processing apparatus comprising:
   a sensor unit that senses environmental information on a predetermined area; and
   a generation unit that generates event information by associating event feature data on a predetermined event obtained based on a sensing result from the sensor unit and meta information including space information on the predetermined event obtained based on the sensing result with each other.
(12) The information processing apparatus according to (10),
   in which the event feature data includes object feature data obtained by an object allowed to be sensed by the sensor unit and voice feature data obtained by voice allowed to be sensed by the sensor unit,
   the control unit determines a coincidence level between the object feature data and the voice feature data obtained based on the sensing result; and
   when the coincidence level exceeds a predetermined coincidence threshold, the generation unit generates the event information.
(13) An information processing method comprising
   a computer generating event information by associating event feature data on a predetermined event obtained based on a sensing result from a sensor unit that senses environmental information on a predetermined area and meta information including space information on the predetermined event obtained based on the sensing result with each other.
(14) A program causing a computer to function as:
   a sensor unit that senses environmental information on a predetermined area; and
   a generation unit that generates event information by associating event feature data on a predetermined event obtained based on a sensing result from the sensor unit and meta information including space information on the predetermined event obtained based on the sensing result with each other.

### Reference Signs List

- 1, 1A, 300: INFORMATION PROCESSING APPARATUS
- 2: SENSOR UNIT
- 3: COMMUNICATION UNIT
- 4: STORAGE UNIT
- 5: CONTROL UNIT
- 6: DRIVE UNIT
- 21: MICROPHONE SENSOR
- 22: CAMERA SENSOR
- 23: DEPTH SENSOR
- 41: VOICE FEATURE DB
- 42: OBJECT MASK DB
- 43: OBJECT FEATURE DB
- 44, 144: EVENT META INFORMATION DB
- 45, 145: EVENT FEATURE DB
- 46, 146: EVENT DB
- 47: THRESHOLD DB
- 48: EVOKING EVENT META INFORMATION
- 51: VOICE FEATURE EXTRACTION UNIT
- 52: OBJECT REGION ESTIMATION UNIT
- 53: OBJECT FEATURE EXTRACTION UNIT
- 54: SOUND SOURCE OBJECT ESTIMATION UNIT
- 55: SPATIAL POSITION INFORMATION ACQUISITION UNIT
- 56: TIME INFORMATION ACQUISITION UNIT
- 57: LEARNING EVOKING UNIT
- 58: ACTION PLAN CONTROL UNIT
- 70: FEATURE EXTRACTION UNIT
- 80: EVENT META INFORMATION ACQUISITION UNIT
- 90: EVENT MEMORY UNIT

## Claims

1. An information processing apparatus comprising:
a sensor unit that senses environmental information on a predetermined area;
a storage unit that stores event information including event feature data on a predetermined event and meta information including space information on the predetermined event associated with the event feature data; and
a control unit that retrieves the event information from the storage unit and acquires the space information included in the event information based on a sensing result from the sensor unit.

2. The information processing apparatus according to claim 1,
wherein the control unit
determines a similarity level between a sensing result sensed by the sensor unit and the event feature data stored in the storage unit, and
when the similarity level exceeds a predetermined evoking threshold, retrieves event information including event feature data that exceeds the evoking threshold from the storage unit.

3. The information processing apparatus according to claim 1,
wherein the event feature data includes object feature data obtained by an object that is allowed to be sensed by the sensor unit and voice feature data obtained by voice that is allowed to be sensed by the sensor unit.

4. The information processing apparatus according to claim 3,
wherein the control unit retrieves, from the storage unit, event information including voice feature data in which a similarity level to voice feature data exceeds a predetermined evoking threshold based on the latter voice feature data obtained from voice sensed by the sensor unit.

5. The information processing apparatus according to claim 3,
wherein the control unit retrieves, from the storage unit, event information including object feature data in which a similarity level to object feature data exceeds a predetermined evoking threshold based on the latter object feature data obtained from an object sensed by the sensor unit.

6. The information processing apparatus according to claim 3,
wherein the object feature data corresponds to a feature amount of an object sensed by the sensor unit, and
the voice feature data corresponds to a feature amount of voice emitted from an object sensed by the sensor unit.

7. The information processing apparatus according to claim 1, allowed to control a mobile robot including a drive unit that moves a housing,
wherein the control unit makes an action plan based on the acquired space information, and performs control of causing the mobile robot to act based on the action plan.

8. The information processing apparatus according to claim 1,
wherein the information processing apparatus is a mobile robot.

9. An information processing method comprising
a computer retrieving event information from a storage unit, and outputs space information included in the event information based on a sensing result from a sensor unit that senses environmental information on a predetermined area, the storage unit storing the event information that includes event feature data on a predetermined event and meta information including the space information on the predetermined event associated with the event feature data.

10. A program causing a computer to function as:
a sensor unit that senses environmental information on a predetermined area;
a storage unit that stores event information including event feature data on a predetermined event and meta information including space information on the predetermined event associated with the event feature data; and
a control unit that retrieves the event information from the storage unit and outputs the space information included in the event information based on a sensing result from the sensor unit.

11. An information processing apparatus comprising:
a sensor unit that senses environmental information on a predetermined area; and
a generation unit that generates event information by associating event feature data on a predetermined event obtained based on a sensing result from the sensor unit and meta information including space information on the predetermined event obtained based on the sensing result with each other.

12. An information processing method comprising
a computer generating event information by associating event feature data on a predetermined event obtained based on a sensing result from a sensor unit that senses environmental information on a predetermined area and meta information including space information on the predetermined event obtained based on the sensing result with each other.

13. A program causing a computer to function as:
a sensor unit that senses environmental information on a predetermined area; and
a generation unit that generates event information by associating event feature data on a predetermined event obtained based on a sensing result from the sensor unit and meta information including space information on the predetermined event obtained based on the sensing result with each other.
